# EUROPÄISCHE PATENTANMELDUNG

(11) **EP 2 175 187 A2**
(43) Veröffentlichungstag der Anmeldung: **14.04.2010**
(21) Anmeldenummer: 09010186.6
(22) Anmeldetag: 06.08.2009
(51) Int. Cl.: F17C 5/06

(54) **Betanken von Fahrzeugen mit unter Druck stehenden, gasförmigen Medien**

(30) Priorität: 09.10.2008 DE 102008051056; 28.04.2009 DE 102009019275
(71) Anmelder: Linde Aktiengesellschaft, 80331 München (DE)
(72) Erfinder: Reese, Wilfried-Henning, 85716 Unterschleißheim (DE); Kraus, Harald, 81377 München (DE)
(74) Vertreter: Zahn, Christoph

(57) **Zusammenfassung**

Es wird ein Verfahren zum Betanken eines Fahrzeuges mit einem unter Druck stehenden, gasförmigen Medium, insbesondere mit unter Druck stehendem, gasförmigen Wasserstoff, beschrieben, wobei das Medium unmittelbar vor der Zuführung in den Fahrzeugtank eine innerhalb eines vorgegebenen Temperaturintervalles liegende Temperatur aufweist und wobei das dem Fahrzeugtank zuzuführende Medium aus unterschiedlichen Quellen stammen und unterschiedliche Temperaturen aufweisen kann.

Erfindungsgemäß wird das dem Fahrzeugtank zuzuführende Medium mittels eines Thermoblocks (T) auf eine innerhalb des vorgegebenen Temperaturintervalles liegende Temperatur abgekühlt und/oder erwärmt.

## Beschreibung

Die Erfindung betrifft ein Verfahren zum Betanken eines Fahrzeuges mit einem unter Druck stehenden, gasförmigen Medium, insbesondere mit unter Druck stehendem, gasförmigen Wasserstoff, wobei das Medium unmittelbar vor der Zuführung in den Fahrzeugtank eine innerhalb eines vorgegebenen Temperaturintervalles liegende Temperatur aufweist und wobei das dem Fahrzeugtank zuzuführende Medium aus unterschiedlichen Quellen stammen und unterschiedliche Temperaturen aufweisen kann.

Unter dem Begriff "Fahrzeug" seien nachfolgend alle Arten von Land-, Luft- und Wasser-Fahrzeugen zu verstehen, bei denen eine Betankung mit einem unter Druck stehenden, gasförmigen Medium, insbesondere mit Wasserstoff, realisierbar ist. Unter dem Begriff "Medium" seien nachfolgend u. a. Gase und Gasgemische zu verstehen. Der Begriff "Fahrzeugtank" umfasse alle Arten von Tanks bzw. Speicherbehälter, die für die Speicherung unter Druck stehender, gasförmiger Medien geeignet sind.

Gegenwärtig werden von nahezu allen Fahrzeugherstellern Fahrzeuge mit Brennstoffzellenantrieben oder modifizierten Verbrennungsmotoren erprobt, bei denen als Energieträger Wasserstoff Verwendung findet. Neben der drucklosen Speicherung von tiefkaltem verflüssigtem Wasserstoff an Bord derartiger Fahrzeuge, wird die Speicherung von gasförmigem Wasserstoff unter einem Druck von bis zu 700 bar erprobt.

Es existieren bereits Wasserstoff-Tankstellen, an denen Betankungen von Fahrzeugen mit gasförmigem Wasserstoff mit Drücken bis zu 700 bar realisiert werden. Um mehrere Fahrzeuge hintereinander und/oder gleichzeitig betanken zu können, werden im Regelfall Betankungsverfahren eingesetzt, bei denen große Mengen an unter Druck stehendem gasförmigem Wasserstoff in entsprechenden Druckpuffern zwischengespeichert werden. Darüber hinaus muss das vorzusehende Kompressorsystem derart dimensioniert bzw. ausgelegt sein, dass die erforderlichen Volumenströme garantiert werden können.

Die geforderten niedrigen Betankungszeiten und die damit einhergehenden hohen Massenströme haben bei atmosphärischem Wasserstoff üblicherweise eine unzulässig starke Erwärmung des Fahrzeugtanks zur Folge. Für die Kompression des Wasserstoffs kommen gegenwärtig üblicherweise ölfreie Kolbenkompressoren zur Anwendung. Nach erfolgter Verdichtung muss der Wasserstoff aufwendig auf ca. -40 °C gekühlt werden, da nur so eine Betankungszeit von einigen Minuten erreicht und gleichzeitig eine unzulässige Erwärmung des Fahrzeugtanks verhindert werden.

Gegenwärtig werden folgende Anforderungen an Wasserstoff-Tankstellen gestellt: Betankung eines Fahrzeugtanks mit 5 kg Wasserstoff unter einem Druck von 700 bar bei Raumtemperatur; die Füll- bzw. Tankzeit betrage maximal 180 Sekunden; der Fahrzeugtank darf sich während des Befüllens auf maximal 85 °C erwärmen; es sollen mindestens drei Betankungen innerhalb von 45 Minuten und 10 Betankungen pro Tag realisiert werden können.

Bei neueren Wasserstoff-Tankstellen wird dazu übergegangen, einen vorzugsweise mit einer Vakuumsuperisolierung versehenen Speicherbehälter für verflüssigten Wasserstoff vorzusehen. Damit kann die zu speichernde Menge an komprimiertem gasförmigem Wasserstoff an der Tankstelle verringert werden. Dies wirkt sich positiv auf den Flächenbedarf der Tankstelle sowie die Sicherheit des Betankungsvorganges aus. Aus diesen Gründen wird die Verwendung von Flüssigwasserstoff für die Versorgung einer öffentlichen Tankstelleninfrastruktur von führenden Unternehmen und Forschungseinrichtungen gegenwärtig als wirtschaftlichste und flexibelste Versorgungsmethode angesehen.

Um den annähernd drucklos gelagerten flüssigen Wasserstoff auf den gewünschten Speicherdruck von bis zu 700 bar verdichten zu können, werden sog. Flüssig- bzw. Kryopumpen vorgesehen. Die Komprimierung des Wasserstoffs mittels derartiger Kryopumpen ist vergleichsweise wirtschaftlich und kostengünstig, da im Falle der Flüssigförderung bzw. -komprimierung lediglich eine geringe Kompressionsarbeit zu leisten ist. Für die Förderung identischer Massenströme mittels einer Kryopumpe bei einem Druck von 900 bar benötigt man Berechnungen zufolge nur ca. 10 % der spezifischen Leistung eines Kompressorsystems. Zugleich ist die Baugröße derartiger Kryopumpen im Vergleich zu einem konventionellen Kompressorsystem geringer.

Des Weiteren ist eine aufwendige Kühlung des mittels einer Kryopumpe verdichteten Wasserstoffstromes nicht mehr erforderlich, da die Temperatur am Ausgang der Kryopumpe vergleichsweise niedrig ist; sie beträgt ca. 50 K. Um eine Überhitzung des Fahrzeugtanks zu vermeiden muss der auf einen Druck von 700 bar verdichtete Wasserstoff unmittelbar vor der Zuführung in den Fahrzeugtank auf eine Temperatur von -40 °C vorgekühlt bzw. angewärmt werden. Aufgrund der Fahrzeugtankspezifikationen sind Temperaturen niedriger als -40 °C ebenfalls nicht zulässig. Der dem Fahrzeugtank zuzuführende Wasserstoffstrom ist somit auf einem vergleichsweise engen Temperaturbereich von ca. -38 bis -40 °C zu konditionieren.

Dies geschieht bisher dadurch, dass das Gas mittels einer Kühlanlage vorgekühlt wird oder der Betankungsprozess, um eine Überhitzung zu vermeiden, langsamer ablaufen muss.

Aufgabe der vorliegenden Erfindung ist es, ein gattungsgemäßes Verfahren zum Betanken eines Fahrzeuges mit einem unter Druck stehenden, gasförmigen Medium, insbesondere mit unter Druck stehendem, gasförmigen Wasserstoff, anzugeben, das die vorgenannten Probleme vermeidet.

Zur Lösung dieser Aufgabe wird ein gattungsgemäßes Verfahren zum Betanken eines Fahrzeuges vorgeschlagen, das dadurch gekennzeichnet ist, dass das dem Fahrzeugtank zuzuführende Medium mittels eines Thermoblocks auf eine innerhalb des vorgegebenen Temperaturintervalles liegende Temperatur abgekühlt und/oder erwärmt wird.

Weitere vorteilhafte Ausgestaltungen des erfindungsgemäßen Verfahrens zum Betanken eines Fahrzeuges, die Gegenstände der abhängigen Patentansprüche darstellen, sind **dadurch gekennzeichnet, dass**
- der Thermoblock derart ausgelegt ist, dass er eine Temperaturerhöhung oder -erniedrigung von max. 10 K, vorzugsweise von max. 5 K erfährt,
- der Thermoblock zumindest zeitweilig mittels eines zusätzlichen Kälte- und/oder Wärmekreislaufes abgekühlt und/oder erwärmt wird,
- das dem Fahrzeugtank zuzuführende Medium aus wenigstens einem Speicherbehälter, der der Speicherung des Mediums in flüssigem Zustand dient, und/oder aus wenigstens einem Speicherbehälter, der der Speicherung des Mediums in gasförmigem Zustand dient, stammt,
- das den Thermoblock durchströmende Kühlmittel anschließend in einem Doppelmantelrohr bis zum Dispenser geführt wird, um die Konditionierung des dem Fahrzeugtank zuzuführende Mediums optimal aufrecht erhalten zu können, und
- sofern das dem Fahrzeugtank zuzuführende Medium aus wenigstens einem Speicherbehälter, der der Speicherung des Mediums in flüssigem Zustand dient, entnommen, angewärmt und verdichtet wird, die Anwärmung des flüssigen Mediums zumindest teilweise mittels des Thermoblocks erfolgt.

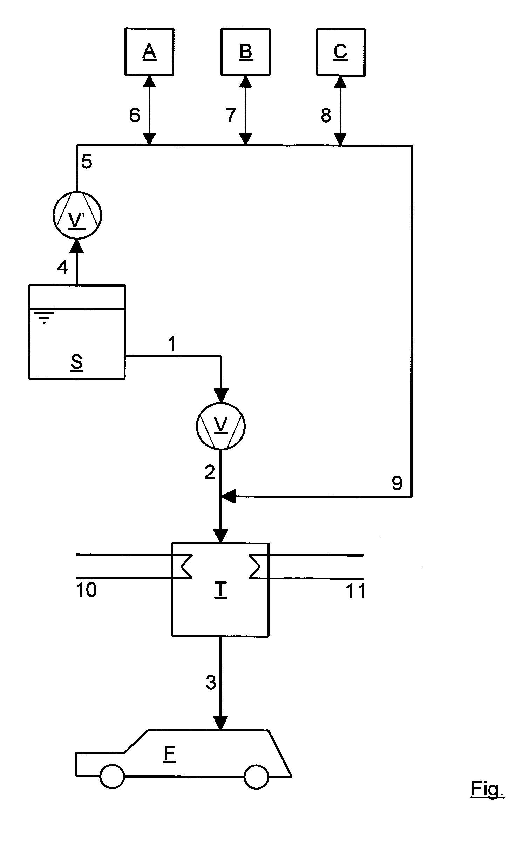

Das erfindungsgemäße Verfahren zum Betanken eines Fahrzeuges sowie weitere vorteilhafte Ausgestaltungen desselben seien nachfolgend anhand des in der Figur dargestellten Ausführungsbeispieles näher erläutert.

Die Figur zeigt einen Speicherbehälter S für verflüssigten Wasserstoff, der ein Speichervolumen zwischen 10 und 200 m³ Wasserstoff aufweist. Derartige Speicherbehälter für verflüssigten Wasserstoff sind aus dem Stand der Technik hinlänglich bekannt. Im Rahmen von Wasserstoff-Tankstellen sind sie vorzugsweise unterirdisch und von den zu betankenden Fahrzeugen überfahrbar angeordnet.

Des Weiteren sind vorzugsweise drei Wasserstoff-Pufferspeicher A, B und C vorgesehen. Hierbei dient der Pufferspeicher A als Hochdruck-Speicher (bevorzugter Speicherdruck zwischen 400 und 700 bar), der Pufferspeicher B als Mitteldruck-Speicher (bevorzugter Speicherdruck zwischen 300 und 500 bar) und der Pufferspeicher C als Niederdruck-Speicher (bevorzugter Speicherdruck zwischen 150 und 400 bar).

Vorzusehen sind des Weiteren eine Kryopumpe V sowie ein Kompressor V'. Die vorgenannte Kryopumpe V kann aus Gründen der Redundanz doppelt vorgesehen werden. Bei wechselndem Betrieb können mit nur einer Antriebseinheit (Hydraulik) beide Kryopumpen betrieben werden. Die Kryopumpe V wird über die Leitung 1, die vorzugsweise vakuum(super)isoliert ausgebildet ist, aus dem Flüssigwasserstoff-Speicherbehälter S mit flüssigem Wasserstoff versorgt. Die in der Praxis zur Anwendung kommenden Kryopumpen V sind speziell auf die bei der Betankung von Fahrzeugen vorliegenden Anforderungen ausgerichtet. Sie bieten die Möglichkeit, flüssigen Wasserstoff von ca. 1 bara auf bis zu 900 bar in einem zweistufigen Verdichtungsprozess zu komprimieren.

Das aufgrund des unvermeidbaren Wärmeeinfalles in die Kryopumpe V sowie die Leitung 1 entstehende Boil-Off-Gas wird über eine in der Figur nicht dargestellte Rückführleitung in den Speicherbehälter S zurückgeführt. Über die Leitung 4 wird dieses Boil-Off-Gas aus dem Kopfraum des Speicherbehälters S abgezogen und mittels des Kompressors bzw. der Kompressionseinheit V auf einen Druck zwischen 100 und 700 bar verdichtet. Über die Leitungsabschnitte 5 sowie 6, 7 und/oder 8 wird das verdichtete Boil-Off-Gas - entsprechend seinem Druckniveau - dem bzw. den Pufferspeichern A, B und/oder C zugeführt.

Wie bereits erwähnt, ist beim Befüllen eines Fahrzeugtanks mit komprimiertem gasförmigem Wasserstoff darauf zu achten, dass um eine Überhitzung des Gases im Fahrzeugtank zu vermeiden, die Temperatur des dem Fahrzeugtank zugeführten Wasserstoffes ca. -40 °C betragen muss.

Zu Beginn eines Betankungsvorganges strömt nunmehr zunächst über die Leitungsabschnitte 6, 7 und/oder 8 sowie 9, 2 und 3 gasförmiger Wasserstoff, der im Wesentlichen Umgebungstemperatur aufweist, aus dem bzw. den Pufferspeichern A, B und/oder C zu dem zu betankenden Fahrzeug F. Ein derartiges Betankungsverfahren wird auch als Pilgerschrittverfahren bezeichnet und ist bspw. in der nicht vorveröffentlichten deutschen Patentanmeldung 102008034499 beschrieben.

Erfindungsgemäß ist nunmehr ein Thermoblock T vorgesehen, der dazu dient, den dem Fahrzeugtank zuzuführenden (komprimierten) Wasserstoff auf die gewünschte Temperatur - im vorliegenden Falle ist dies eine Temperatur von ca. -40 °C - abzukühlen. Beim Durchgang des Wasserstoffes durch den Thermoblock T erwärmt sich der Thermoblock T geringfügig um 0,5 bis 1 K. Sobald über die Leitungsabschnitte 6, 7 und/oder 8 sowie 9, 2 und 3 ein Druckausgleich zwischen einem Pufferspeicher A, B und/oder C und dem zu betankenden Fahrzeug F erreicht ist, wird die Zufuhr von gasförmigem Wasserstoff aus dem bzw. den Pufferspeichern A, B und/oder C beendet.

Nunmehr wird über die Leitungsabschnitte 1, 2 und 3 der mittels der Kryopumpe V auf einen Druck bis zu 900 bar komprimierte Wasserstoff, der am Ausgang der Kryopumpe V eine Temperatur von ca. -200 °C aufweist, dem Fahrzeugtank zugeführt. Im Thermoblock T erfährt dieser Wasserstoffstrom eine Anwärmung auf die gewünschte Temperatur von ca. -40 °C. Dabei wird der Thermoblock T um ca. 0,5 bis 1 K abgekühlt.

Während eines herkömmlich ablaufenden Betankungsprozesses muss somit weder Wärme noch Kälte, die der Anwärmung bzw. der Abkühlung der dem Fahrzeugtank zuzuführenden Wasserstoffströme dient, zugeführt werden. Das Einbinden des Thermoblocks T in die zum Stand der Technik zählenden Betankungsverfahren ermöglicht somit einen Temperaturausgleich über den gesamten Betankungsprozess.

Insbesondere für die Vorkühlung des komprimierten, dem Fahrzeug zuzuführenden Wasserstoffes, die eine optimale, schnelle Betankung ermöglicht, wird im Idealfall keine zusätzliche Kühl-Energie benötigt. Gerade die erforderliche Kühlleistung bei "warmen" Verdichtungsprozessen stellt eine energetische Verschlechterung des Gesamtprozesses dar. Aufgrund der großen thermischen Kapazität des Thermoblocks kann im Regelfall auf eine aufwendige, schnelle Temperaturregelung mit entsprechend großen Heiz- und Kühlleistungen verzichtet werden. Der erfindungsgemäß vorzusehende Thermoblock wirkt dadurch beruhigend auf das thermische System ein. Aufgrund unterschiedlicher Pufferdrücke in den Pufferspeichern A, B und C kann im Falle mehrerer unmittelbar hintereinander erfolgender Betankungen nicht für jede Betankung gewährleistet werden, dass der vorgeschriebene Temperaturausgleich eintritt. In vorteilhafter Weise wird der Thermoblock daher zumindest zeitweilig mittels eines zusätzlichen Kälte- und/oder Wärmekreislaufes (10 und 11) gekühlt und/oder erwärmt.

Eine in der Figur nicht dargestellte Verfahrensführung zeichnet sich dadurch aus, dass, sofern das dem Fahrzeugtank zuzuführende Medium aus wenigstens einem Speicherbehälter, der der Speicherung des Mediums in flüssigem Zustand dient, entnommen, angewärmt und verdichtet wird, die Anwärmung des flüssigen Mediums zumindest teilweise mittels des Thermoblocks erfolgt. Sofern der über Leitung 1 aus dem Speicherbehälter S abgezogene, verflüssigte Wasserstoff nicht mittels der Kryopumpe V, sondern einer Kompressoreinheit auf den gewünschten Betankungsdruck verdichtet wird, ist es erforderlich, den flüssigen Wasserstoff vor der Zuführung in diese Kompressoreinheit auf annähernd Umgebungstemperatur zu erwärmen, da die Saugseite der Kompressoren eine Zuführtemperatur von mehr als -10 °C erfordert. Daher wird bei der vorbeschriebenen Verfahrensführung die Anwärmenergie des flüssigen Wasserstoffes in dem Thermoblock T gespeichert und kann folglich während des eigentlichen Betankungsvorganges zum Abkühlen des dem Fahrzeugtank zuzuführenden, unter Druck stehenden, gasförmigen Wasserstoffes herangezogen werden.

Der erfindungsgemäß vorzusehende Thermoblock T muss eine für den jeweiligen Anwendungsfall ausreichend große thermische Kapazität aufweisen. Hierbei ist insbesondere die Anzahl der Betankungsprozesse pro Zeiteinheit von Bedeutung. Der Thermoblock T ist für einen maximalen Betriebsdruck von wenigstens 900 bar auszulegen. Sofern in der Zukunft höhere Betankungsdrücke realisiert werden sollten, ist die Auslegung des Thermoblocks T entsprechend anzupassen.

Bei der Realisierung des Thermoblocks T wird vorzugsweise eine (Edelstahl)Rohrwendel, durch die das dem Fahrzeugtank zuzuführende Medium strömt, in einem entsprechend dimensionierten Aluminiumblock eingeschmolzen. Falls erforderlich ist eine Isolierung zur Umgebung vorzusehen, um das System ohne große Kälteverluste auf der gewünschten Betriebstemperatur halten zu können. Wie bereits erwähnt, ist gegebenenfalls ein Heiz- und/oder Kühlsystem zu integrieren. Aufgrund der Länge der Rohrwendel kann auch auf der Druckseite eine Beruhigung des dem Fahrzeugtank zuzuführenden Gasstroms erreicht werden. Der Puffereffekt nimmt dem Gasstrom die Druckspitzen nach oben und unten, so dass am Ausgang des Thermoblocks ein beruhigter Gasstrom für die Fahrzeugbetankung zur Verfügung steht.

Es sei nochmals betont, dass das vorbeschriebene erfindungsgemäße Verfahren zum Betanken eines Fahrzeuges nicht nur bei der Betankung von Fahrzeugen mit komprimiertem gasförmigem Wasserstoff zur Anwendung kommen kann, sondern im Prinzip bei allen vergleichbaren Medien.

## Patentansprüche

1. Verfahren zum Betanken eines Fahrzeuges mit einem unter Druck stehenden, gasförmigen Medium, insbesondere mit unter Druck stehendem, gasförmigen Wasserstoff, wobei das Medium unmittelbar vor der Zuführung in den Fahrzeugtank eine innerhalb eines vorgegebenen Temperaturintervalles liegende Temperatur aufweist und wobei das dem Fahrzeugtank zuzuführende Medium aus unterschiedlichen Quellen stammen und unterschiedliche Temperaturen aufweisen kann, **dadurch gekennzeichnet, dass** das dem Fahrzeugtank zuzuführende Medium mittels eines Thermoblocks (T) auf eine innerhalb des vorgegebenen Temperaturintervalles liegende Temperatur abgekühlt und/oder erwärmt wird.

2. Verfahren nach Anspruch 1, **dadurch gekennzeichnet, dass** der Thermoblock (T) derart ausgelegt ist, dass er eine Temperaturerhöhung oder -erniedrigung von max. 10 K, vorzugsweise von max. 5 K erfährt.

3. Verfahren nach Anspruch 1 oder 2, **dadurch gekennzeichnet, dass** der Thermoblock (T) zumindest zeitweilig mittels eines zusätzlichen Kälte- und/oder Wärmekreislaufes (10, 11) abgekühlt und/oder erwärmt wird.

4. Verfahren nach einem der vorhergehenden Ansprüche 1 bis 3, **dadurch gekennzeichnet, dass** das dem Fahrzeugtank zuzuführende Medium aus wenigstens einem Speicherbehälter, der der Speicherung des Mediums in flüssigem Zustand dient, und/oder aus wenigstens einem Speicherbehälter, der der Speicherung des Mediums in gasförmigem Zustand dient, stammt.

5. Verfahren nach einem der vorhergehenden Ansprüche 1 bis 3, wobei das dem Fahrzeugtank zuzuführende Medium aus wenigstens einem Speicherbehälter, der der Speicherung des Mediums in flüssigem Zustand dient, entnommen, angewärmt und verdichtet wird, **dadurch gekennzeichnet, dass** die Anwärmung des flüssigen Mediums zumindest teilweise mittels des Thermoblocks (T) erfolgt.
